# EUROPÄISCHE PATENTSCHRIFT

(11) **EP 1 132 607 B1**
(45) Veröffentlichungstag und Bekanntmachung des Hinweises auf die Patenterteilung: **13.10.2004**
(21) Anmeldenummer: 01104861.8
(22) Anmeldetag: 28.02.2001
(51) Int. Cl.: F02D 41/40, F02D 35/02, F02D 41/38, F02D 41/24

(54) **Verfahren zur Regelung der Mehrfacheinspritzung in einem Verbrennungsmotor**
Method for controlling multiple injections in an internal combustion engine
Procéce pour le contrôle d'injections multiples dans un moteur à combustion interne

(30) Priorität: 10.03.2000 DE 10011621
(43) Veröffentlichungstag der Anmeldung: 12.09.2001
(73) Patentinhaber: Delphi Technologies, Inc., Troy, MI 48007 (US)
(72) Erfinder: Engel, Joseph A., 4671 Oberkorn (LU); DuFaux, Henri M.A.F., 6723 Habay-La-Vieille (BE)
(74) Vertreter: Manitz, Finsterwald & Partner GbR

(56) Entgegenhaltungen:
- EP-A- 0 982 496
- WO-A-99/61771
- DE-A- 19 819 197
- US-A- 5 642 705

## Beschreibung

Die Erfindung betrifft ein Verfahren zur Regelung der Mehrfacheinspritzung in einem Verbrennungsmotor, insbesondere in einem Dieselmotor.

Es ist heutzutage üblich, bei Verbrennungsmotoren, insbesondere bei Dieselmotoren, die Einspritzung des Kraftstoffes in eine Voreinspritzung, bei der eine den Zylinder vorwärmende Menge Kraftstoff eingespritzt wird, und eine nachfolgende Haupteinspritzung zu untergliedern, bei der die für den Antrieb des Verbrennungsmotors erforderliche Kraftstoffmenge eingespritzt wird. Um die durch die Verbrennung des Kraftstoffs insgesamt im Zylinder freigesetzte Wärmemenge während des Verbrennungsvorgangs gezielt beeinflussen zu können, ist es bekannt, die Haupteinspritzung als Mehrfacheinspritzung vorzunehmen, bei der eine vorgegebene Kraftstoffmenge in mehreren Einzeleinspritzvorgängen in den Zylinder eingespritzt wird. Auf diese Weise kann der Verbrennungsvorgang derart beeinflußt werden, daß eine über den gesamten Verbrennungsvorgang verglichen mit einer einfachen Haupteinspritzung gezieltere, bessere Wärmefreisetzung im Zylinder auftritt.

Die US 5 642 705 zeigt Ausführungsbeispiele eines Mehrfacheinspritzrverfahrens zur katalysator aktivierung bei denen zur Steuerung direkt auf die Wärmefreisetzung im Zylinder zurückgegriffen wird.

Um die Mehrfacheinspritzung wunschgemäß regeln zu können, werden derzeit Multipulsmodelle verwendet, bei denen die Einspritzparameter, nämlich der Einspritzzeitpunkt, die Einspritzdauer und die das Einspritzventil ansteuernde Pulsweite, entsprechend der gewünschten Motorleistung und der vorgegebenen, einzuspritzenden Kraftstoffmenge variiert werden. Aufgrund der vielfältigen Abhängigkeiten zwischen den Einspritzparametern einerseits und den die Motorleistung beeinflussenden äußeren Bedingungen, wie beispielsweise der Temperatur des Kraftstoffes, der Ansteuergenauigkeit des Einspritzventils oder der Kühlleistung der Kühleinrichtung des Verbrennungsmotors, andererseits ist allenfalls eine ungenaue Steuerung der Einzeleinspritzvorgänge möglich.

Es ist Aufgabe der Erfindung, ein Verfahren zur Regelung der Mehrfacheinspritzung in einem Verbrennungsmotor anzugeben, das eine verglichen mit den bekannten Verfahren exaktere Einstellung der Mehrfacheinspritzung ermöglicht.

Die Erfindung löst die Aufgabe durch ein Verfahren mit den Merkmalen nach Anspruch 1 und insbesondere dadurch, daß bei dem Verfahren für eine Mehrfacheinspritzung eine der gewünschten Motorleistung entsprechende, einzuspritzende Kraftstoffmenge vorgegebenen wird, für jeden Einzeleinspritzvorgang der Mehrfacheinspritzung eine Teilmenge der vorgegebenen Kraftstoffmenge bestimmt wird, und auf Grundlage der für jeden Einzeleinspritzvorgang bestimmten Teilmenge sowie der gewünschten Motorleistung Einspritzparameter ausgewählt werden, während des durch die Mehrfacheinspritzung verursachten Verbrennungsvorganges die Wärmefreisetzung erfaßt wird, die erfaßte Wärmefreisetzung mit einer auf der vorgegebenen Kraftstoffmenge sowie der gewünschten Motorleistung basierenden, vorgegebenen Wärmefreisetzung verglichen wird, und bei einer Abweichung der erfaßten Wärmefreisetzung von der vorgegebenen Wärmefreisetzung die Einspritzparameter für die Einzeleinspritzvorgänge der nachfolgenden Mehrfacheinspritzung entsprechend verändert werden.

Bei dem erfindungsgemäßen Verfahren werden nicht, wie sonst üblich die einzelnen Parameter der Mehrfacheinspritzung überwacht, sondern vielmehr die durch die Mehrfacheinspritzung entstehende Wärmefreisetzung als Grundlage für die Regelung der Einzeleinspritzvorgänge der nachfolgenden Mehrfacheinspritzungen verwendet. Auf diese Weise wird nur eine einzige Basisgröße eingesetzt, auf deren Grundlage die für die Einzeleinspritzvorgänge zu regelnden Einspritzparameter bestimmt werden, so daß Abhängigkeiten, die zwischen den einzelnen Einspritzvorgängen bestehen zwar nicht gänzlich beseitigt, aber in ihrer Wirkungsweise deutlich vermindert sind, wodurch sich die Regelung der Mehrfacheinspritzung insgesamt vereinfacht, gleichzeitig jedoch eine exaktere Einstellung ermöglicht.

Vorteilhafte Weiterbildungen der Erfindung ergeben sich aus der nachfolgenden Beschreibung, der Zeichnung sowie den Unteransprüchen.

Bei einer bevorzugten Ausführungsform des Verfahrens wird bei einer Abweichung der erfaßten Wärmefreisetzung von der vorgegebenen Wärmefreisetzung zusätzlich das Verhältnis zwischen den einzuspritzenden Teilmengen für die Einzeleinspritzvorgänge der nachfolgenden Mehrfacheinspritzung entsprechend verändert, so daß zusätzlich eine weitere Einstellmöglichkeit gegeben ist, mit der eine noch feinere Regelung der verschiedenen Parameter möglich wird. Da auch hier das Verhältnis zwischen den einzuspritzenden Teilmengen von der erfaßten Wärmefreisetzung abhängt, die als Basisgröße für die Regelung dient, ergibt sich auch hier, trotz der Beeinflussung der anderen Regelparameter, wie der Einspritzdauer oder dem Einspritzzeitpunkt, eine verbesserte Regelgenauigkeit.

Die Erfassung der Wärmefreisetzung wird vorzugsweise durch ein Messen der Leitfähigkeit des Verbrennungsgases auf Grundlage der im Verbrennungsgas enthaltenen positiv geladenen Teilchen durchgeführt. Dieses Meßverfahren zeichnet sich dadurch aus, daß es auch bei hohen Temperaturen während der Verbrennungsvorgänge, die einen Wert von 2000 K übersteigen, trotz der überproportionalen Entstehung von negativen Ionen im Verbrennungsgas das aus diesen Meßverfahren ermittelte Meßsignal unbeeinflußt bleibt und den tatsächlichen Verlauf des Verbrennungsvorgangs wiederspiegelt.

So hat sich in Versuchsreihen gezeigt, daß bei einem an sich bekannten Meßverfahren, bei dem während des zu überprüfenden Verbrennungsvorgangs der Anteil an negativ geladenen Teilchen, wie Elektronen, Stickstoffionen und Sauerstoffionen, bestimmt wird, das Meßsignal bei hohen Verbrennungstemperaturen verfälscht ist. Insbesondere bei Verbrennungsmotoren wird beobachtet, daß ab einer Temperatur von etwa 2000 K während der Verbrennungsvorgänge im Zylinder verstärkt Stickoxide entstehen. Die verstärkte Bildung von Stickoxiden im Verbrennungsgas führt zu dem Problem, daß die durch die übermäßige Bildung von Stickoxiden frei werdenden Elektronen, die aufgrund ihrer geringen Masse auch aus entfernteren Bereichen zur Meßeinrichtung wandern, die erfaßten Leitfähigkeitswerte des Verbrennungsgases verfälschen, so daß das Meßsignal gestört und somit eine exakte Überwachung des Verbrennungsvorgangs verhindert ist. Des weiteren hat sich bei den Versuchsreihen gezeigt, daß bei niedrigen Temperaturen im Verbrennungsgas zumindest annähernd ein Gleichgewicht zwischen dem Gehalt an negativ geladenen Teilchen und dem Gehalt an positiv geladenen Teilchen besteht. Bei zunehmender Verbrennungstemperatur nimmt ab dem genannten Temperaturwert von etwa 2000 K durch die plötzliche Aufspaltung von Stickstoffmolekülen und Sauerstoffmolekülen der Gehalt an negativ geladenen Teilchen im Verbrennungsgas zu, während der Anteil an positiv geladenen Teilchen im Verbrennungsgas entsprechend dem tatsächlichen Verlauf des Verbrennungsvorgangs konstant bleibt bzw. abnimmt. Des weiteren hat sich bei den Versuchsreihen gezeigt, daß die entstehende Wärmefreisetzung zumindest annähernd in ihrem Verlauf dem Verlauf einer durch Messen der Anteile positiv geladener Teilchen im Verbrennungsgas bestimmten Meßsignalkurve entspricht. Bei entsprechender rechnerischer Anpassung des Meßsignals kann folglich der Verlauf der Wärmefreisetzungverhältnismäßig genau ermittelt werden, so daß durch das Messen der im Verbrennungsgas enthaltenen positiv geladenen Teilchen der Verbrennungsvorgang sehr genau nachvollzogen und entsprechend nachgeregelt werden.

Bei einer besonders bevorzugten Ausführungsform des Verfahrens wird die vorgegebene Wärmefreisetzung, die als Referenz für die Regelung der Mehrfacheinspritzung verwendet wird, bestimmt, indem während einer vor der zu regelnden Mehrfacheinspritzung erfolgten Einzeleinspritzung die während dieser Einzeleinspritzung freigesetzte Wärmemenge bestimmt wird. Zu diesem Zweck wird die Einzeleinspritzung mit der vorgegebenen Kraftstoffmenge durchgeführt, wobei die für die Einzeleinspritzung zu verwendeten Einspritzparameter vorzugsweise auf der vorgegebenen Kraftstoffmenge und der gewünschten Motorleistung basieren und aus einer Vielzahl von Einspritzparametern ausgewählt worden sind. Mit Hilfe dieser Einzeleinspritzung, die anstelle der Mehrfacheinspritzung als Haupteinspritzung vorgenommen wird, kann ein für die vorgegebene Kraftstoffmenge und die gewünschte Motorleistung entsprechender Wert für die Wärmefreisetzung bestimmt werden, der sich aus dem tatsächlichen Motorbetrieb des Verbrennungsmotors ergibt, so daß Abweichungen in der Leistung des Verbrennungsmotors, die sich aufgrund von Abnutzungserscheinungen, Abweichungen in der Zusammensetzung des Kraftstoffes und ähnliches gegenüber einer theoretisch ermittelten Wärmefreisetzung ergeben, die Regelung der Mehrfacheinspritzung nicht beeinflussen. Die Wärmefreisetzung kann auf diese Weise individuell für den jeweiligen Verbrennungsmotor währenden des Betriebes bestimmt werden.

Auch bei dieser Ausführungsform des Verfahrens wird die Erfassung der für den Vergleich verwendeten, während der Einfacheinspritzung bestimmten Wärmefreisetzung mit Hilfe der Messung der Leitfähigkeit des Verbrennungsgases während des durch die Einfacheinspritzung verursachten Verbrennungsvorgangs auf Grundlage der im Verbrennungsgas enthaltenden positiv geladenen Teilchen durchgeführt.

Die Einfacheinspritzung, mit der die vorgegebene Wärmefreisetzung ermittelt wird, wird vorzugsweise nach einer vorgegebenen Anzahl an Mehrfacheinspritzungen, beispielsweise nach 50 Mehrfacheinspritzungen, jeweils einmal durchgeführt, um die nachfolgenden Mehrfacheinspritzungen zu überwachen und gegebenenfalls nachzuregeln.

Sollte aufgrund der Betriebsbedingungen des Verbrennungsmotors eine Bestimmung der vorgegebenen Wärmefreisetzung mit Hilfe der Einzeleinspritzung nicht vorgenommen werden können, wird zusätzlich vorgeschlagen, die vorgegebene Wärmefreisetzung zumindest teilweise auf Grundlage empirischer Auswertung zu bestimmen, so daß auf jeden Fall eine verbesserte Regelung auch bei derartigen Betriebsbedingungen des Verbrennungsmotors gegeben ist.

Alternativ kann die vorgegebene Wärmefreisetzung für denselben Zweck zumindest teilweise auch auf Grundlage theoretischer thermodynamischer Ansätze, vorzugsweise auf Grundlage des Seiliger-Prozesses, rechnerisch bestimmt werden.

Nachfolgend wir die Erfindung anhand eines Ausführungsbeispieles unter Bezugnahme auf die Zeichnung näher erläutert. Darin zeigen:
- Fig. 1: ein Diagramm, in dem eine Leitfähigkeits-Meßkurve gemeinsam mit einer Wärmefreisetzungskurve bezogen auf den Kurbelwellenwinkel eines Dieselmotors gezeigt ist, und
- Fig. 2: ein Ablaufdiagramm, in dem ein Verfahren zur Regelung einer Mehrfacheinspritzung in dem Dieselmotor gezeigt ist.

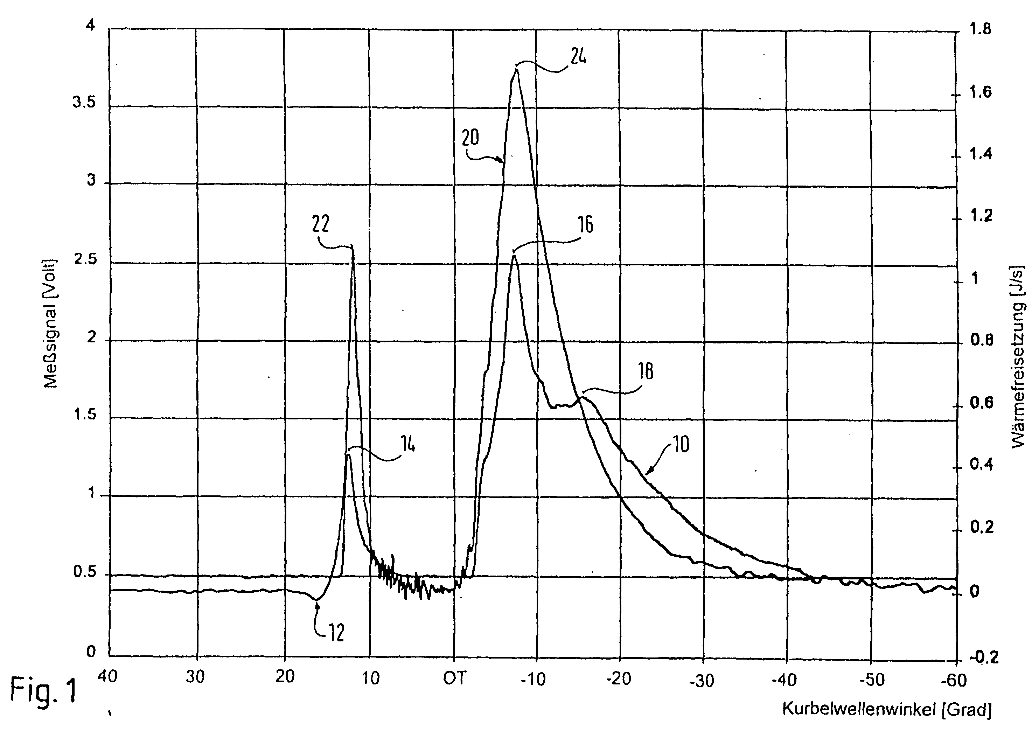

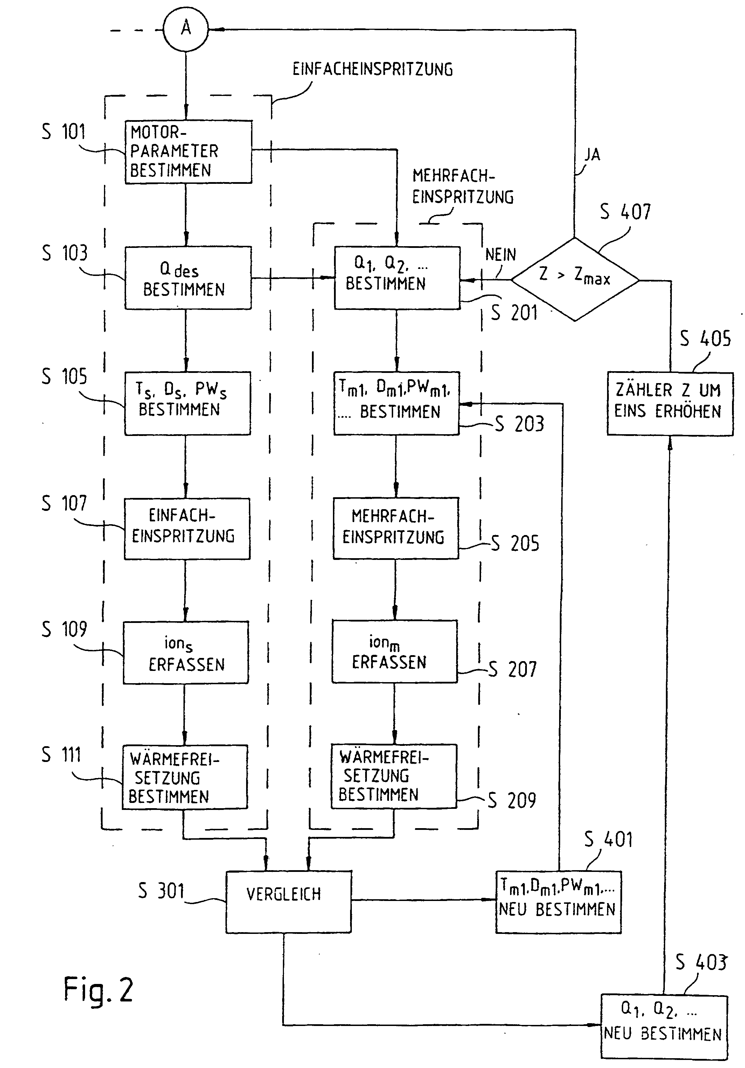

Bei dem nachfolgend beschriebenen Ausführungsbeispiel wird das erfindungsgemäße Verfahren bei einem Dieselmotor eingesetzt. Zum Messen der Leitfähigkeit des im Zylinder befindlichen Verbrennungsgases wird eine Glühkerze des jeweiligen Zylinders des Dieselmotors verwendet. Die Glühkerze des jeweiligen Zylinders ist mit einem Referenzwiderstand in Reihe geschaltet und mit der Innenwand des Zylinders leitend verbunden. Zur Bestimmung der Leitfähigkeit des Verbrennungsgases im jeweiligen Zylinder auf Grundlage der im Verbrennungsgas enthaltenen positiv geladenen Teilchen wird an die Glühkerze während eines Teils des Verdichtungshubes und eines Teils des Arbeitshubes eine negative Spannung angelegt. Durch die während des Verbrennungsprozesses entstehenden positiv geladenen Teilchen ändert sich die Leitfähigkeit des Verbrennungsgases zwischen der Glühkerze und der Innenwand des Zylinders, wodurch sich die am Referenzwiderstand abfallende Spannung ändert, die gemessen und zur Auswertung verstärkt wird. Die verschiedenen Spannungswerte werden als Folge von Leitfähigkeitswerten in einem Speicher abgespeichert. Als Beispiel ist in den Figuren 1 und 2 eine Meßsignalkurve 10 dargestellt, die die Änderung der Leitfähigkeitswerte bezogen auf den Kurbelwellenwinkel zeigt, wobei die Leitfähigkeitswerte auf dem Anteil an positiv geladenen Teilchen im Verbrennungsgas basieren.

Nachfolgend wird unter Bezugnahme auf die Fig. 1 der Verlauf der Meßsignalkurve 10 näher erläutert. Zu Beginn des Überwachungszeitraumes bei einem Kurbelwellenwinkel von etwa 40° vor dem oberen Totpunkt OT des Kolbens zeigt die Meßsignalkurve 10 einen Wert von etwa 0,4 Volt. Ab einem Kurbelwellenwinkel von etwa 20° vor dem oberen Totpunkt OT des Kolbens beginnt die Motorsteuerung des Dieselmotors mit einer Voreinspritzung, bei der eine geringe Menge Dieselkraftstoff in den Zylinder eingespritzt wird, um das Innere des Zylinders vor der eigentlichen Haupteinspritzung zu erwärmen. Dies zeigt sich in der Meßkurve 10 durch die kleinen Signalschwankungen 12 im Signalverlauf.

Ab einem Kurbelwellenwinkel von etwa 14° vor dem oberen Totpunkt OT entzündet sich der im Zylinder befindliche Kraftstoff, wodurch die Leitfähigkeit des Verbrennungsgases zunimmt, wie der Meßsignalkurve 10 durch die erste Signalspitze 14 zu entnehmen ist. Die Signalspitzen 14 der Meßsignalkurve 10 flacht nach einem plötzlichen Anstieg mit sehr steiler Flanke kontinuierlich wieder ab, bis sie bei einem Kurbelwellenwinkel von etwa 5° vor dem oberen Totpunkt OT etwa wieder 0,4 Volt zeigt. Etwa während dieses Zeitpunktes wird die eigentliche Haupteinspritzung des Kraftstoffes in den Zylinder vorgenommen. Durch die Voreinspritzung wurde, wie zuvor bereits erläutert, der Innenraum des Zylinders vorgewärmt, so daß der während der Haupteinspritzung eingespritzte Kraftstoff zumindest teilweise verdampft und sich gleichmäßig im Innenraum des Zylinders verteilt. Bei einem Kurbelwellenwinkel von etwa -2° nach dem oberen Totpunkt OT des Kolbens entzündet sich der Kraftstoff im Inneren des Zylinders, wodurch sich die Leitfähigkeit des Verbrennungsgases erneut verändert, wie die zweite Signalspitze 16 in der Meßsignalkurve 10 zeigt, die ihr Maximum bei einem Kurbelwellenwinkel von etwa -7° bezogen auf den oberen Totpunkt OT des Kolbens besitzt.

Die Meßsignalkurve 10 steigt dabei auf einen Wert von etwa 2,6 Volt, wie durch die zweite Signalspitze 16 gezeigt wird. Anschließend fällt die Meßsignalkurve 10 unter Bildung einer dritten Signalspitze 18 mit einem Wert von etwa 1,6 Volt bei einem Kurbelwellenwinkel von etwa -15° bezogen auf den oberen Totpunkt OT des Kolbens sanft ab, bis sie bei einem Kurbelwellenwinkel von etwa -40° bezogen auf den oberen Totpunkt OT des Kolbens gleichfalls zumindest annähernd 0,4 Volt erreicht.

Des weiteren ist in Fig. 1 der Verlauf der Wärmeabgabe als Wärmefreisetzungskurve 20 für denselben Verbrennungsvorgang, für den die Meßsignalkurve 10 aufgetragen wurde, gezeigt. Die Wärmefreisetzungskurve 20 beginnt zunächst mit einem Niveau von etwa 0 Joule pro Sekunde und zeigt gleichfalls bei einem Kurbelwellenwinkel von etwa 14° vor dem oberen Totpunkt OT eine erste Signalspitze 22, die bei etwa 1,1 Joule pro Sekunde ihr Maximum aufweist. Die Lage der ersten Signalspitze 22 der Wärmefreisetzungskurve 20 entspricht exakt der Lage der ersten Signalspitze 14 der Meßsignalkurve 10. Die Wärmefreisetzungskurve 20 fällt in gleicher Weise wie die Meßsignalkurve 10 auf ein Minimum von 0 Joule pro Sekunde ab und steigt dann unter Bildung einer zweiten Signalspitze 24 bei einem Kurbelwellenwinkel von etwa -2° nach dem oberen Totpunkt OT des Kolbens unter Bildung einer zweiten Signalspitze 24 auf einen maximalen Wert von etwa 1,7 Joule pro Sekunde. Nach der zweiten Signalspitze 24 fällt die Wärmefreisetzungskurve 20 sanft ab, wobei der Verlauf der Wärmefreisetzungskurve 20 an den Verlauf der Meßsignalkurve 10 nach deren dritter Signalspitze 18 angenähert ist.

Wie dem Diagramm aus Fig. 1 zu entnehmen ist, zeigt die Wärmefreisetzungskurve 20 einen Verlauf, bei dem die entstehenden Signalspitzen 22 und 24 bezogen auf den Kurbelwellenwinkel die gleiche Lage zeigen, wie die erste Signalspitze 14 und das Paar Signalspitzen 16 und 18 der Meßsignalkurve 10.

In Fig. 2 ist ein Ablaufdiagramm eines Verfahrens zur Regelung der Mehrfacheinspritzung in dem Dieselmotor gezeigt. In diesem Zusammenhang wird unter Mehrfacheinspritzung eine Haupteinspritzung verstanden, die in mehrere Einzeleinspritzvorgänge untergliedert ist. Unter dem Begriff Einzeleinspritzung wird dagegen eine Haupteinspritzung verstanden, bei der die einzuspritzende Kraftstoffmenge während eines einzigen Einspritzvorgangs in den Zylinder des Dieselmotors eingespritzt wird. Der Haupteinspritzung, die entweder als Einfacheinspritzung oder als Mehrfacheinspritzung vorgenommen wird, kann eine Voreinspritzung vorgeordnet sein, mit der das Innere des Zylinders des Dieselmotors vor der Haupteinspritzung erwärmt wird.

In dem Ablaufdiagramm sind zwei Blöcke nebeneinander dargestellt, wobei der links dargestellte Block den Regelvorgang für eine Einfacheinspritzung und der rechts zu diesem angeordnete Block die Regelung einer Mehrfacheinspritzung betrifft.

Sobald der Motor gestartet wird und seine Betriebstemperatur erreicht hat, beginnt die Motorregelung mit dem nachfolgend beschriebenen Regelungsverfahren. Zunächst werden bei diesem Verfahren ausgehend von einem Anfangsschritt A in Schritt S 101 die Betriebsparameter des Dieselmotors bestimmt. Hierzu zählen unter anderem die Betriebstemperatur des Dieselmotors sowie seine aktuelle Drehzahl. In einem nachfolgenden Schritt S 103 wird aus den zuvor bestimmten Motorparametern eine der gewünschten Motorleistung entsprechende, einzuspritzende Kraftstoffmenge Q_{des} bestimmt. Sobald die Kraftstoffmenge Q_{des} bestimmt worden ist, wird in Schritt S 105 auf Grundlage dieser Kraftstoffmenge Q_{des} sowie auf Grundlage der Motorparameter, die in Schritt S 101 bestimmt worden sind, die Einspritzparameter ermittelt. Hierzu zählen die Einspritzzeit Tₛ und die Einspritzdauer Dₛ sowie die Pulsweite PWₛ, mit der das Einspritzventil angesteuert werden soll. Des weiteren kann in Schritt S 105, sofern das bei der Motorregelung vorgesehen ist, auch der Verlauf der Einspritzung als Einspritzparameter vorgegeben werden, gemäß dem die einzuspritzende Kraftstoffmenge Q_{des} während des Einspritzvorgangs variiert werden kann.

Sobald in den Schritten S 103 und S 105 die einzuspritzende Kraftstoffmenge Q_{des} und die Einspritzparameter Tₛ, Dₛ und PWₛ bestimmt worden sind, fährt die Motoreinspritzung in Schritt S 107 mit der Einfacheinspritzung der Kraftstoffmenge Q_{des} entsprechend den ausgewählten Einspritzparametern Tₛ, Dₛ und PWₛ fort. Während der Einfacheinspritzung wird in Schritt S 109 die Leitfähigkeit ions des Verbrennungsgases bestimmt und als Meßsignalkurve bezogen auf den Kurbelwellenwinkel des Dieselmotors abgespeichert. Der Verlauf der Meßsignalkurve entspricht beispielsweise dem in Fig. 1 gezeigten Verlauf der Meßsignalkurve 10. Sobald die Einfacheinspritzung abgeschlossen ist, wird in Schritt S 111 die während des durch die Einfacheinspritzung verursachten Verbrennungsvorgangs freigesetzte Wärmemenge auf Grundlage der gemessenen Leitfähigkeitswerte bestimmt und für die weitere Verarbeitung gespeichert. Die sich hieraus ergebende Kurve der Wärmefreisetzung entspricht dabei in ihrem Verlauf beispielsweise dem Verlauf der in Fig. 1 gezeigten Wärmefreisetzungskurve 20.

Sobald in den Zylinder, bei dem die zuvor beschriebene Einfacheinspritzung durchgeführt wurde, erneut Kraftstoff eingespritzt werden soll, fährt die Steuerung mit einer Mehrfacheinspritzung fort, die im rechten Block in Fig. 2 gezeigt ist. Bei der Mehrfacheinspritzung wird zunächst die während der Einfacheinspritzung bestimmte Kraftstoffmenge Q_{des} in Schritt S 201 in der Anzahl der Einzeleinspritzvorgänge der Mehrfacheinspritzung entsprechende Kraftstoffteilmengen Q₁, Q₂, etc. untergliedert, wobei die Kraftstoffteilmengen Q₁, Q₂, etc. zusätzlich auf Grundlage der in Schritt S 101 bestimmten Motorparameter eingestellt werden. Anschließend werden in Schritt S 203 auf Grundlage der Kraftstoffteilmengen Q₁, Q₂, etc. und der Motorparameter aus Schritt S 101 für jeden Einzeleinspritzvorgang der Mehrfacheinspritzung die Einspritzparameter, nämlich der Einspritzzeitpunkt Tₘ₁, Tₘ₂, etc. und die Einspritzdauer Dₘ₁, Dₘ₂, etc. sowie die jeweilige Pulsweite PWₘ₁, PWₘ₂, etc. in Schritt S 203 bestimmt.

Nachdem die für die Mehrfacheinspritzung erforderlichen Parameter, nämlich die einzuspritzende Kraftstoffteilmengen Q₁, Q₂, etc. und die Einspritzparameter Tₘ₁, Dₘ₁, PWₘ₁, etc. bestimmt worden sind, beginnt die Motorregelung entsprechend den Vorgaben mit den Einzeleinspritzvorgängen der Mehrfacheinspritzung in Schritt S 205. Sobald die Mehrfacheinspritzung aktiviert worden ist, wird gleichzeitig von der Motorregelung die Leitfähigkeit ionₘ in Schritt S 207 im Zylinder erfaßt. Aus der erfaßten Leitfähigkeit ionₘ wird anschließend in Schritt S 209 die für die Mehrfacheinspritzung insgesamt erfolgte Wärmefreisetzung bestimmt.

Sobald in Schritt S 209 die Wärmefreisetzung für die Mehrfacheinspritzung bestimmt worden ist, wird sie in einem nachfolgenden Schritt S 301 mit der während der Einfacheinspritzung in Schritt S 111 bestimmten Wärmefreisetzung verglichen. Die in Schritt S 111 bestimmte Wärmefreisetzung dient dabei als Sollwert für die nachfolgende Regelung der weiteren Mehrfacheinspritzungen. Sollte sich während des Vergleichs der beiden Wärmefreisetzungen in Schritt S 301 eine Abweichung zwischen diesen Werten ergeben, werden in Schritt S 401 entsprechend angepaßte Einspritzparameter Tₘ₁, Dₘ₁, PWₘ₁, Tₘ₂, Dₘ₂, PWₘ₂, etc. neu bestimmt, wobei auch hier die in Schritt S 101 ermittelten Motorparameter mit berücksichtigt werden. Des weiteren werden in Schritt S 403 das Verhältnis zwischen den während der Mehrfacheinspritzung einzuspritzenden Teilmengen Q₁, Q₂, etc. neu bestimmt, wobei die Gesamtmenge der Kraftstoffteilmengen Q₁, Q₂, etc. die in Schritt S 103 vorgegebene insgesamt einzuspritzende Kraftstoffmenge Q_{des} nicht übersteigt und auch hier bei der Bestimmung der Kraftstoffteilmengen Q₁, Q₂, etc. die in Schritt S 101 ermittelten Motorparameter mit berücksichtigt werden.

In einem den Schritt S 403 folgenden Schritt S 405 wird ferner ein zu Beginn der ersten Mehrfacheinspritzung auf Null zurückgesetzter Zähler Z um 1 erhöht. Mit Hilfe des Zählers Z wird die Anzahl der insgesamt bereits durchgeführten Mehrfacheinspritzungen gezählt. Dabei ist zu bemerken, daß der Schritt S 405 beispielsweise auch zu Beginn, d.h. unmittelbar vor Schritt S 201 oder auch während der Mehrfacheinspritzung zwischen den einzelnen Schritten S 201 bis S 209 vorgenommen werden kann. In einem den Schritt S 405 nachfolgenden Schritt S 407 wird anschließend der Wert des Zählers Z mit einer Maximalanzahl Zₘₐₓ durchzuführenden Mehrfacheinspritzungen verglichen. Im vorliegenden Fall liegt der Wert der Maximalanzahl Zₘₐₓ bei 50. In Schritt S 407 wird nun der Wert des Zählers Z mit der Maximalanzahl Zₘₐₓ verglichen. Stellt sich heraus, daß der Betrag des Zählers Z kleiner als die Maximalanzahl Zₘₐₓ ist, fährt die Motorregelung mit Schritt S 201 fort. Übersteigt dagegen der Betrag des Zählers Z die Maximalanzahl Zₘₐₓ maximal durchzuführender Mehrfacheinspritzungen fährt die Steuerung mit Schritt A fort, an dem die Motorregelung erneut mit einer Einfacheinspritzung beginnt, die für die der Einfacheinspritzung nachfolgenden Mehrfacheinspritzungen die einzuspritzende Kraftstoffmenge Q_{des} und die dabei entstehende Wärmemenge erneut bestimmt.

Ferner ist zu bemerken, daß die in Fig. 2 gezeigte Regelschleife, bei der mehrere Mehrfacheinspritzungen auf Grundlage eines zuvor durch eine Einfacheinspritzung ermittelten Sollwertes durchgeführt werden, solange durchgeführt wird, bis sich die in Schritt S 101 ermittelten Motorparameter so stark ändern, daß die Durchführung einer erneuten Ermittlung eines Wärmefreisetzungs-Sollwertes durch eine Einfacheinspritzung erforderlich wird.

Bei dem in Fig. 2 beschriebenen Verfahren zur Regelung der Mehrfacheinspritzung ist es ferner möglich, den Schritt S 109 durch einen Schritt zu ersetzen, bei dem die Wärmefreisetzung nicht aktuell im Motorzylinder erfaßt wird, sondern vielmehr auf Grundlage abgespeicherter Leitfähigkeitswerte, die in Abhängigkeit von den ermittelten Motorparametern ausgewählt wurden, oder auf Grundlage theoretischer, thermodynamischer Ansätze rechnerisch bestimmt wird.

### Bezugszeichenliste

- 10: positive Meßsignalkurve
- 12: Signalschwankungen der Meßsignalkurve
- 14: erste Signalspitze der Meßsignalkurve
- 16: zweite Signalspitze der Meßsignalkurve
- 18: dritte Signalspitze der Meßsignalkurve
- 20: Wärmefreisetzungskurve
- 22: erste Signalspitze der Wärmefreisetzungskurve
- 24: zweite Signalspitze der Wärmefreisetzungskurve

- Q_{des}: vorbestimmte Kraftstoffmenge für die Einfacheinspritzung
- Tₛ: Einspritzzeitpunkt für die Einfacheinspritzung
- Dₛ: Einspritzdauer für die Einfacheinspritzung
- PWₛ: Pulsweite für die Einfacheinspritzung
- ionₛ: Leitfähigkeit gemessen bei der Einfacheinspritzung
- Q₁, Q₂: Kraftstoffteilmengen für die Mehrfacheinspritzung
- Tₘ₁, Tₘ₂,: Einspritzzeitpunkte für die Mehrfacheinspritzung
- Dₘ₁, Dₘ₂,: Einspritzdauer für die Mehrfacheinspritzung
- PWm1, PWₘ₂,: Pulsweiten für die Mehrfacheinspritzung
- ionₘ: Leitfähigkeitswert gemessen bei der Mehrfacheinspritzung
- Z: Zähler für die Anzahl der Mehrfacheinspritzungen
- Zₘₐₓ: maximale Anzahl der Mehrfacheinspritzungen

## Patentansprüche

1. Verfahren zur Regelung der Mehrfacheinspritzung in einem Verbrennungsmotor, insbesondere in einem Dieselmotor, wobei bei dem Verfahren
für eine Mehrfacheinspritzung eine der gewünschten Motorleistung entsprechende, einzuspritzende Kraftstoffmenge (Q_{des}) vorgegebenen wird,
für jeden Einzeleinspritzvorgang der Mehrfacheinspritzung eine Teilmenge (Q₁, Q₂) der vorgegebenen Kraftstoffmenge (Q_{des}) bestimmt wird, und auf Grundlage der für jeden Einzeleinspritzvorgang bestimmten Teilmenge (Q₁, Q₂) sowie der gewünschten Motorleistung Einspritzparameter (Tₘ, Dₘ, PWₘ) ausgewählt werden,
während des durch die Mehrfacheinspritzung verursachten Verbrennungsvorganges die Wärmefreisetzung erfaßt wird,
die erfaßte Wärmefreisetzung mit einer auf der vorgegebenen Kraftstoffmenge (Q_{des}) sowie der gewünschten Motorleistung basierenden, vorgegebenen Wärmefreisetzung verglichen wird, und
bei einer Abweichung der erfaßten Wärmefreisetzung von der vorgegebenen Wärmefreisetzung die Einspritzparameter (Tₘ, Dₘ, PWₘ) für die Einzeleinspritzvorgänge der nachfolgenden Mehrfacheinspritzung der Abweichung entsprechend verändert werden.

2. Verfahren nach Anspruch 1, bei dem bei einer Abweichung der erfaßten Wärmefreisetzung von der vorgegebenen Wärmefreisetzung das Verhältnis zwischen den einzuspritzenden Teilmengen (Q₁, Q₂) für die Einzeleinspritzvorgänge der nachfolgenden Mehrfacheinspritzung entsprechend verändert wird.

3. Verfahren nach Anspruch 1 oder 2, bei dem die Erfassung des während des durch die Mehrfacheinspritzung verursachten Verbrennungsvorgangs auftretenden Wärmefreisetzung durch ein Messen der Leitfähigkeit des Verbrennungsgases auf Grundlage der im Verbrennungsgas enthaltenen positiv geladenen Teilchen erfolgt, wobei vorzugsweise eine Folge von Leitfähigkeitswerten gebildet wird.

4. Verfahren nach Anspruch 1, 2 oder 3, bei dem zum Bestimmen der vorgegebenen Wärmefreisetzung vor der Mehrfacheinspritzung eine Einfacheinspritzung vorgenommen wird, bei der die vorgegebene Kraftstoffmenge (Q_{des}) entsprechend ausgewählter Einspritzparameter (Tₛ, Dₘ, PWₛ) eingespritzt wird, wobei die Einspritzparameter (Tₛ, Dₘ, PWₛ), vorzugsweise basierend auf der vorgegebenen Kraftstoffmenge (Q_{des}) und der gewünschten Motorleistung, aus einer Vielzahl von Einspritzparametern ausgewählt worden sind.

5. Verfahren nach Anspruch 4, bei dem die Erfassung der während des durch die Einfacheinspritzung verursachten Verbrennungsvorgangs auftretenden Wärmefreisetzung, mit der die während der Mehrfacheinspritzung auftretende Wärmefreisetzung verglichen wird, durch ein Messen der Leitfähigkeit des Verbrennungsgases auf Grundlage der im Verbrennungsgas enthaltenen positiv geladenen Teilchen erfolgt, wobei vorzugsweise eine Folge von Leitfähigkeitswerten gebildet wird.

6. Verfahren nach Anspruch 4 oder 5, bei dem nach einer vorgegebenen Anzahl an Mehrfacheinspritzungen jeweils eine Einfacheinspritzung zum Überwachung und Nachstellen der nachfolgenden Mehrfacheinspritzungen vorgenommen wird.

7. Verfahren nach einem der Ansprüche 1 bis 6, bei dem die vorgegebene Wärmefreisetzung zumindest teilweise auf Grundlage empirischer Auswertung bestimmt wird.

8. Verfahren nach einem der Ansprüche 1 bis 6, bei dem die vorgegebene Wärmefreisetzung zumindest teilweise auf Grundlage theoretischer thermodynamischer Ansätze, vorzugsweise auf Grundlage des Seiliger-Prozesses, rechnerisch bestimmt wird.

9. Verfahren nach einem der vorhergehenden Ansprüche, bei dem als Einspritzparameter ein Einspritzzeitpunkt (Tₘ, Tₛ) und eine Einspritzdauer (Dₘ, Dₛ) sowie eine Pulsweite (PWₘ, PWₛ), mit der ein Einspritzventil angesteuert wird, verwendet werden.

## Claims

1. A method for the regulation of the multiple injection in an internal combustion engine, in particular in a diesel engine, wherein, in the method,
an amount of fuel (Q_{des}) which corresponds to the desired engine power and which is to be injected is predetermined for a multiple injection,
for each single injection process of the multiple injection, a partial amount (Q₁, Q₂) of the predetermined amount of fuel (Q_{des}) is determined and injection parameters (Tₘ, Dₘ, PWₘ) are selected on the basis of the partial amount (Q₁, Q₂) which is determined for each single injection process and of the desired engine power,
the heat liberation of the combustion process caused by the multiple injection is measured,
the measured heat liberation is compared with a predetermined heat liberation based on the predetermined amount of fuel (Q_{des}) and the desired engine power, and
in the event of a deviation of the measured heat liberation from the predetermined heat liberation, the injection parameters (Tₘ, Dₘ, PWₘ) for the single injection processes of the subsequent multiple injection are varied in accordance with the deviation.

2. A method in accordance with claim 1, wherein in the event of a deviation of the measured heat liberation from the predetermined heat liberation, the ratio between the partial amounts (Q₁, Q₂) to be injected is varied accordingly for the single injection processes of the subsequent multiple injection.

3. A method in accordance with claim 1 or claim 2, wherein the measurement of the heat liberation which arises during the combustion process caused by the multiple injection takes place through a measurement of the conductivity of the combustion gas on the basis of the positively charged particles included in the combustion gas, with a sequence of conductivity values preferably being formed.

4. A method in accordance with claim 1, claim 2 or claim 3, wherein a single injection in which the predetermined amount of fuel (Q_{des}) is injected in accordance with selected injection parameters (Tₛ, Dₘ, PWₛ) is carried out prior to the multiple injection for the determination of the predetermined heat liberation, with the injection parameters (Tₛ, Dₘ, PWₛ) having been selected from a plurality of injection parameters preferably on the basis of the predetermined amount of fuel (Q_{des}) and of the desired engine power.

5. A method in accordance with claim 4, wherein the measurement of the heat liberation which arises during the combustion process caused by the single injection, with which the heat liberation which arises during the multiple injection will be compared, takes place through a measurement of the conductivity of the combustion gas on the basis of the positively charged particles included in the combustion gas, with a sequence of conductivity values preferably being formed.

6. A method in accordance with claim 4 or claim 5, wherein, after a predetermined number of multiple injections, a single injection is in each case carried out for monitoring and resetting the subsequent multiple injections.

7. A method in accordance with any one of the claims 1 to 6, wherein the predetermined heat liberation is determined at least partly on the basis of anempirical evaluation.

8. A method in accordance with any one of the claims 1 to 6, wherein the predetermined heat liberation is computationally determined at least partly on the basis of theoretical thermodynamic methods, preferably on the basis of the Seiliger process.

9. A method in accordance with any one of the preceding claims, wherein an injection time point (Tₘ, Tₛ) and an injection duration (Dₘ, Dₛ) as well as a pulse width (PWₘ, PWₛ) with which an injection valve is controlled, are used as injection parameters.

## Revendications

1. Procédé de régulation de l'injection multiple dans un moteur à combustion interne, en particulier dans un moteur diesel, dans lequel
on prédéfinit pour une injection multiple une quantité de carburant à injecter (Q_{des}) correspondant à la puissance moteur souhaitée,
on définit pour chaque processus d'injection individuel de l'injection multiple une quantité partielle (Q₁, Q₂) de la quantité de carburant prédéfinie (Q_{des}) et, sur la base de la quantité partielle (Q₁, Q₂) définie pour chaque processus d'injection individuel ainsi que sur la base de la puissance moteur souhaitée, on sélectionne des paramètres d'injection (Tₘ, Dₘ, PWₘ),
on détecte le dégagement de chaleur pendant le processus de combustion provoqué par l'injection multiple,
on compare le dégagement de chaleur détecté avec un dégagement de chaleur prédéfini basé sur la quantité de carburant prédéfinie (Q_{des}) ainsi que sur la puissance moteur souhaitée, et
en cas d'écart du dégagement de chaleur détecté par rapport au dégagement de chaleur prédéfini, on modifie en fonction de cet écart les paramètres d'injection (Tₘ, Dₘ, PWₘ) pour les processus d'injection individuels de l'injection multiple suivante.

2. Procédé selon la revendication 1, dans lequel, en cas d'écart du dégagement de chaleur détecté par rapport au dégagement de chaleur prédéfini, on fait varier en conséquence le rapport entre les quantités partielles à injecter (Q₁, Q₂) pour les processus d'injection individuels de l'injection multiple suivante.

3. Procédé selon la revendication 1 ou la revendication 2, dans lequel on détermine la détection du dégagement de chaleur qui se produit pendant le processus de combustion provoqué par l'injection multiple en mesurant la conductibilité du gaz de combustion sur la base des particules chargées positivement contenues dans le gaz de combustion, en formant de préférence une suite de valeurs de conductibilité.

4. Procédé selon la revendication 1, la revendication 2 ou la revendication 3, dans lequel, pour déterminer le dégagement de chaleur prédéfini, on effectue avant l'injection multiple une injection simple dans laquelle la quantité de carburant prédéfinie (Q_{des}) est injectée en fonction de paramètres d'injection sélectionnés (Tₛ, Dₘ, PWₛ), les paramètres d'injection (Tₛ, Dₘ, PWₛ), de préférence basés sur la quantité de carburant prédéfinie (Q_{des}) et sur la puissance moteur souhaitée, ayant été sélectionnés à partir d'une pluralité de paramètres d'injection.

5. Procédé selon la revendication 4, dans lequel on détermine la détection du dégagement de chaleur qui se produit pendant le processus de combustion provoqué par l'injection, qui est comparé au dégagement de chaleur qui se produit pendant l'injection multiple, en mesurant la conductibilité du gaz de combustion sur la base des particules chargées positivement contenues dans le gaz de combustion, en formant de préférence une suite de valeurs de conductibilité.

6. Procédé selon la revendication 4 ou la revendication 5, dans lequel, après un nombre prédéfini d'injections multiples, on effectue à chaque fois une injection simple afin de surveiller et réajuster les injections multiples suivantes.

7. Procédé selon l'une des revendications 1 à 6, dans lequel le dégagement de chaleur prédéfini est déterminé au moins en partie sur la base d'une évaluation empirique.

8. Procédé selon l'une des revendications 1 à 6, dans lequel le dégagement de chaleur prédéfini est déterminé au moins en partie par le calcul sur la base d'équations théoriques de la thermodynamique, de préférence sur la base de la méthode de Seiliger.

9. Procédé selon l'une des revendications précédentes, dans lequel on utilise comme paramètres d'injection un moment de l'injection (Tₘ, Tₛ) et une durée de l'injection (Dₘ, Dₛ), ainsi qu'une largeur d'impulsion (PWₘ, PWₛ) avec laquelle une soupape d'injection est commandée.
